# EUROPEAN PATENT APPLICATION

(11) **EP 2 267 053 A1**
(43) Date of publication of application: **29.12.2010**
(21) Application number: 10163152.1
(22) Date of filing: 18.05.2010
(51) Int. Cl.: C08G 61/12, C08L 65/00

(54) **Conductive polymer suspension and method for producing the same, conductive polymer material, and solid electrolytic capacitor and method for producing the same**

(30) Priority: 27.05.2009 JP 2009127314
(71) Applicant: Nec Tokin Corporation, Sendai-shi, Miyagi 982-8510 (JP)
(72) Inventor: Kobayakawa, Ryuta, Sendai-shi Miyagi 982-8510 (JP); Nobuta, Tomoki, Sendai-shi Miyagi 982-8510 (JP); Takahashi, Naoki, Sendai-shi Miyagi 982-8510 (JP); Sugawara, Yasuhisa, Sendai-shi Miyagi 982-8510 (JP); Suzuki, Satoshi, Sendai-shi Miyagi 982-8510 (JP)
(74) Representative: Duckett, Anthony Joseph

(57) **Abstract**

An exemplary aspect of the invention provides a conductive polymer suspension for providing a conductive polymer material with high conductivity and a method for producing the same, and provides a solid electrolytic capacitor with low ESR and a method for producing the same. In an exemplary embodiment, a monomer providing a conductive polymer is subjected to chemical oxidative polymerization in a solvent comprising a dopant of an organic acid or a salt thereof, using an oxidant, to synthesize the conductive polymer; the conductive polymer is purified; the purified conductive polymer and an oxidant are mixed in an aqueous solvent comprising a polyacid; and an imidazole compound is further added to produce a conductive polymer suspension.

## Description

### BACKGROUND OF THE INVENTION

### Field of the Invention

An exemplary aspect of the invention relates to a conductive polymer suspension and a method for producing the same, a conductive polymer material, and a solid electrolytic capacitor and a method for producing the same.

### Description of the Related Art

Conductive organic materials are used for the electrodes of capacitors, the electrodes of dye-sensitized solar cells and the like, the electrodes of electroluminescent displays, and the like. Conductive polymer materials obtained by polymerizing pyrrole, thiophene, aniline and the like are known as the conductive organic materials. Also, various methods for producing a dispersion of a conductive polymer material are proposed.

JP 2636968 B discloses a technology regarding a solution (dispersion) of polythiophene and a method for producing the same. The dispersion of polythiophene comprises water or a mixture of water-miscible organic solvent and water as a dispersion medium, a polythiophene consisting of structural units of 3,4-dialkoxythiophene, and a polyanion derived from polystyrenesulfonic acid having a molecular weight in the range of 2,000 to 500,000. The polythiophene is obtained by chemical oxidative polymerization in the presence of a polyanion of polystyrenesulfonic acid having a molecular weight in the range of 2,000 to 500,000.

JP 4077675 B discloses a technology regarding a water dispersion of a composite of poly(3,4-dialkoxythiophene) and a polyanion, a method for producing the same, a coating composition comprising the water dispersion, and a coated substrate comprising a transparent conductive film formed by coating with the composition. This water dispersion is obtained by polymerizing 3,4-dialkoxythiophene in an aqueous solvent, in the presence of a polyanion, using peroxodisulfuric acid as an oxidant. Alternatively, this water dispersion is obtained by subjecting 3,4-dialkoxythiophene to chemical oxidative polymerization in an aqueous solvent, in the presence of a polyanion, using an oxidant, with the pH of the reaction solution decreased by adding an acid selected from the group consisting of water-soluble inorganic acids and organic acids.

JP 2006-96975 A discloses a technology regarding a conductive composition containing a π-conjugated conductive polymer, a dopant and a nitrogen-containing aromatic cyclic compound, and a conductive crosslinked material formed by subjecting this conductive composition to heating treatment and/or ultraviolet irradiation treatment. For example, the conductive composition is obtained by adding a nitrogen-containing aromatic cyclic compound comprising imidazole to a water dispersion of a composite of poly(3,4-ethylenedioxythiophene) and polystyrenesulfonic acid obtained by polymerization of 3,4-ethylenedioxythiophene in an aqueous solvent, in the presence of a polystyrenesulfonic acid (polyanion), using an oxidant.

### SUMMARY OF THE INVENTION

However, in a method for subjecting 3,4-dialkoxythiophene to chemical oxidative polymerization in one stage, in the presence of a polyanion acting as a dopant, like the methods described in JP 2636968 B and JP 4077675 B, the control of the doping rate is difficult. In other words, undoped polyanions, that is, polyanions not contributing to conductivity, are present in an excess amount, and it is difficult to say that this method is sufficient as a producing method for obtaining a conductive polymer material with higher conductivity.

Also, a conductive polymer film obtained by the method described in JP 2636968 B has sufficient conductivity as an antistatic material, but when it is used, for example, as the solid electrolyte of a capacitor, it is difficult to sufficiently satisfy requirements for lower ESR, in terms of conductivity. In addition, the capacitor comprising the solid electrolyte comprising excess polyanions has a disadvantage that the reliability, particularly the properties in a higher humidity atmosphere, is poor.

Also, the conductive composition described in JP 2006-96975 A is obtained, for example, by subjecting 3,4-ethylenedioxythiophene to chemical oxidative polymerization in one stage, in the presence of polystyrenesulfonic acid acting as a dopant, using an oxidant.

It is an object of an exemplary embodiment of the invention to solve the above-mentioned problems and to provide a conductive polymer suspension for providing a conductive polymer material with high conductivity and a method for producing the same, and provide a solid electrolytic capacitor with low ESR and a method for producing the same.

A method for producing a conductive polymer suspension according to an exemplary embodiment comprises:
subjecting a monomer providing a conductive polymer to chemical oxidative polymerization in a solvent comprising a dopant of an organic acid or a salt thereof, using an oxidant, to synthesize the conductive polymer;
purifying the conductive polymer;
mixing the purified conductive polymer and an oxidant in an aqueous solvent comprising a polyacid; and
adding an imidazole compound to the obtained mixed liquid to obtain the conductive polymer suspension.

The monomer is preferably at least one selected from pyrrole, thiophene and aniline, and derivatives thereof, particularly preferably 3,4-ethylenedioxythiophene. The dopant is preferably at least one selected from benzenesulfonic acid, naphthalenesulfonic acid and camphorsulfonic acid, and derivatives thereof, and salts.

The polymerization of the monomer is preferably performed in the presence of a surfactant. For the purification of the conductive polymer, the conductive polymer is preferably washed using a solvent capable of dissolving the monomer and/or the oxidant, and the filtered conductive polymer is preferably further subjected to hot water washing and/or heat treatment.

The polyacid is preferably polystyrenesulfonic acid, and the polystyrenesulfonic acid has a weight average molecular weight of 2,000 to 500,000. The imidazole compound is preferably at least one selected from imidazole and 2-methylimidazole.

A conductive polymer suspension according to an exemplary embodiment is obtained by the above-mentioned method. A polymer material according to an exemplary embodiment is obtained by removing the solvent from the above-mentioned polymer suspension.

A solid electrolytic capacitor according to an exemplary embodiment comprises a solid electrolyte layer comprising the above-mentioned conductive polymer material, and preferably comprises an anode conductor consisting of a valve action metal, and a dielectric layer formed on a surface of the anode conductor, and the solid electrolyte layer is formed on the dielectric layer. The valve action metal is preferably at least one selected from aluminum, tantalum, and niobium.

A method for producing a solid electrolytic capacitor according to an exemplary embodiment comprises:
forming a dielectric layer on a surface of an anode conductor consisting of a valve action metal; and
coating or impregnating the dielectric layer with the above-mentioned conductive polymer suspension and removing the solvent from the conductive polymer suspension to form a solid electrolyte layer comprising a conductive polymer material.

A method for producing a solid electrolytic capacitor according to an exemplary embodiment comprises:
forming a dielectric layer on a surface of an anode conductor consisting of a valve action metal;
subjecting a monomer providing a conductive polymer to chemical oxidative polymerization or electrolytic polymerization on the dielectric layer to form a first solid electrolyte layer comprising the conductive polymer; and
coating or impregnating the first solid electrolyte layer with the above-mentioned conductive polymer suspension and removing the solvent from the conductive polymer suspension to form a second solid electrolyte layer.

The conductive polymer included in the first solid electrolyte layer is preferably a polymer obtained by subjecting at least one selected from pyrrole, thiophene, aniline and derivatives thereof, as the monomer, to chemical oxidative polymerization or electrolytic polymerization. The valve action metal is preferably at least one selected from aluminum, tantalum, and niobium.

An exemplary aspect of the invention can provide a conductive polymer suspension for providing a conductive polymer material with high conductivity and a method for producing the same, and particularly provide a solid electrolytic capacitor with low ESR and a method for producing the same.

### BRIEF DESCRIPTION OF THE DRAWINGS

FIG. 1 is an X-ray diffraction chart of conductive polymer films formed in Example 1 and Comparative Example 2; and
FIG. 2 is a schematic cross-sectional view showing the structure of a solid electrolytic capacitor in one exemplary embodiment.

### DETAILED DESCRIPTION OF THE PREFERRED EMBODIMENTS

A method for producing a conductive polymer suspension according to an exemplary embodiment will be described.

First, as a first step, a monomer providing a conductive polymer is subjected to chemical oxidative polymerization in a solvent comprising a dopant of a low molecular organic acid or a salt thereof, using an oxidant, to synthesize the conductive polymer. By performing the first step, a conductive polymer with a high degree of polymerization and a high degree of crystallinity can be obtained.

The monomer can be appropriately selected from monomers providing conductive polymers. Specific examples of the monomer include pyrrole, thiophene and aniline, and derivatives thereof. Specific examples of the pyrrole derivatives include 3-alkylpyrroles such as 3-hexylpyrrole, 3,4-dialkylpyrroles such as 3,4-dihexylpyrrole, 3-alkoxypyrroles such as 3-methoxypyrrole, and 3,4-dialkoxypyrroles such as 3,4-dimethoxypyrrole. Specific examples of the thiophene derivatives include 3,4-ethylenedioxythiophene and derivatives thereof, 3-alkylthiophenes such as 3-hexylthiophene, and 3-alkoxythiophenes such as 3-methoxythiophene. Specific examples of the aniline derivatives include 2-alkylanilines such as 2-methylaniline, and 2-alkoxyanilines such as 2-methoxyaniline. Among them, 3,4-ethylenedioxythiophene represented by the following formula (1) and derivatives thereof are preferred. Examples of the 3,4-ethylenedioxythiophene derivatives include 3,4-(1-hexyl)ethylenedioxythiophene. One monomer can be used, or two or more monomers can be used in combination.

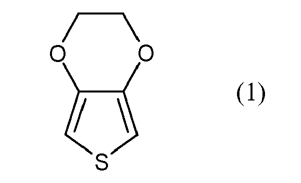

A low molecular organic acid or a salt thereof is used as a dopant. Specific examples of the low molecular organic acid or a salt thereof include alkylsulfonic acids, benzenesulfonic acids, naphthalenesulfonic acids, anthraquinonesulfonic acids and camphorsulfonic acids, and derivatives thereof, and iron salts thereof. The low molecular organic acid may be a monosulfonic acid, a disulfonic acid, or a trisulfonic acid. Specific examples of the alkylsulfonic acid derivatives include 2-acrylamide-2-methylpropanesulfonic acid. Specific examples of the benzenesulfonic acid derivatives include phenolsulfonic acids, styrenesulfonic acids, toluenesulfonic acids, and dodecylbenzenesulfonic acids. Specific examples of the naphthalenesulfonic acid derivatives include 1-naphthalenesulfonic acid, 2-naphthalenesulfonic acid, 1,3-naphthalenedisulfonic acid, 1,3,6-naphthalenetrisulfonic acid, and 6-ethyl-1-naphthalenesulfonic acid. Specific examples of the anthraquinonesulfonic acid derivatives include anthraquinone-1-sulfonic acid, anthraquinone-2-sulfonic acid, anthraquinone-2,6-disulfonic acid, and 2-methylanthraquinone-6-sulfonic acid. Among them, 1-naphthalenesulfonic acid, 2-naphthalenesulfonic acid, 1,3,6-naphthalenetrisulfonic acid, anthraquinonedisulfonic acids, p-toluenesulfonic acid and camphorsulfonic acids, and iron salts thereof are preferred. Among these, camphorsulfonic acids (including optically active substances) have a large effect on higher crystallization of a polymer and are preferred. Also, p-toluenesulfonic acid is preferred because it also functions as an oxidant.

The amount of the dopant used is not particularly limited because even if an excess amount of the dopant is added, it can be removed by purification in the second step. But, the amount of the dopant used is preferably in the range of 1 to 100 parts by weight, more preferably 1 to 20 parts by weight, with respect to 1 part by weight of the monomer.

As a solvent for the reaction, water, an organic solvent or a water-mixed organic solvent can be used, and a solvent with good compatibility with the monomer is preferably selected. Further, particularly preferably, a solvent with good compatibility with the dopant and the oxidant is selected. Specific examples of the organic solvent include alcohol solvents such as methanol, ethanol and propanol; aromatic hydrocarbon solvents such as benzene, toluene and xylene; and aliphatic hydrocarbon solvents such as hexane. One organic solvent can be used, or two or more organic solvents can be mixed and used. Among them, ethanol is preferred, and only ethanol or a mixed solvent of ethanol and water is preferably used.

An oxidant is not particularly limited, but iron salts and persulfates of inorganic acids and organic acids are preferred as the oxidant. Specific examples of the oxidant include ferric chloride hexahydrate, anhydrous ferric chloride, ferric nitrate nonahydrate, ferric nitrate, ferric sulfate n-hydrate, ammonium ferric sulfate dodecahydrate, ferric perchlorate n-hydrate, ferric tetrafluoroborate, cupric chloride, cupric sulfate, cupric tetrafluoroborate, nitrosonium tetrafluoroborate, ammonium persulfate, sodium persulfate, potassium persulfate, potassium periodate, hydrogen peroxide, ozone, potassium hexacyanoferrate, tetraammonium cerium sulfate dihydrate, bromine, iodine and iron (III) p-toluenesulfonate. Among these, ammonium persulfate and iron (III) p-toluenesulfonate are preferred. Among them, iron (III) p-toluenesulfonate is particularly preferred because it also serves as an organic acid dopant. Each of these oxidants may be used alone, or two or more of these oxidants may be combined in any proportion and used.

The amount of the oxidant used is not particularly limited because even if an excess amount of the oxidant is added, it can be removed by purification in the second step. But, the amount of the oxidant used is preferably in the range of 0.5 to 100 parts by weight, more preferably 1 to 40 parts by weight, with respect to 1 part by weight of the monomer, in order to allow the reaction to occur in a milder oxidizing atmosphere to obtain a polymer with high conductivity.

The first step can also be performed in the presence of a surfactant. The monomer is poorly soluble in water, and therefore, when water is used as the solvent, the use of the surfactant can improve the dispersibility of the monomer. As the surfactant, an anionic surfactant, a cationic surfactant, or an amphoteric surfactant can be used, and dodecylbenzenesulfonic acid and a polyethylene glycol are preferred. Each of the surfactants may be used alone, or two or more surfactants may be combined in any proportion and used.

The amount of the surfactant used is not particularly limited because even if an excess amount of the surfactant is added, it can be removed by purification in the second step. But, the amount of the surfactant used is preferably in the range of 0.01 to 10 parts by weight, more preferably 0.1 to 5 parts by weight, with respect to 1 part by weight of the monomer.

The conductive polymer obtained by subjecting the monomer to chemical oxidative polymerization has a structural unit derived from the monomer. For example, when 3,4-ethylenedioxythiophene represented by the formula (1) is used as the monomer, the obtained conductive polymer has a structural unit represented by the following formula (2).

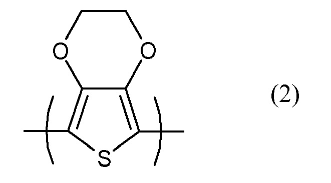

The chemical oxidative polymerization is preferably performed with stirring. The reaction temperature of the chemical oxidative polymerization is not particularly limited. But, the chemical oxidative polymerization is performed with the reflux temperature of the solvent used as the upper limit. The reaction temperature is preferably 0 to 100 °C, more preferably 10 to 50 °C. If the reaction temperature is not appropriate, the conductivity of the obtained conductive polymer may decrease. The reaction time of the chemical oxidative polymerization depends on the type and amount of the oxidant, reaction temperature, stirring conditions and the like, but is preferably about 5 to 100 hours. When the conductive polymer is produced, the reaction liquid changes to dark blue.

Next, as a second step, the conductive polymer is purified. Specifically, the conductive polymer is separated from the reaction liquid comprising the conductive polymer obtained in the first step, and washed to remove the dopant, the monomer and the oxidant. By performing the second step, a conductive polymer with high purity can be obtained. Specfic examples of the method for separating the conductive polymer from the reaction liquid include filtration and centrifugation.

Preferably, the washing solvent used in the second step does not dissolve the conductive polymer, and the monomer and/or the oxidant is soluble in the washing solvent. Specific examples of the washing solvent include water, and alcohol solvents such as methanol, ethanol and propanol. One washing solvent may be used, or two or more washing solvents may be used in combination. The extent of the washing can be checked by the pH measurement or colorimetric observation of the washing solvent after the washing.

Further, the conductive polymer is preferably subjected to hot water washing and/or heat treatment because the metal component derived from the oxidant and the like can be removed to a higher degree. The heat treatment temperature is not particularly limited as long as it is equal to or less than the decomposition temperature of the conductive polymer. But, the heat treatment temperature is preferably less than 300 °C. Also, known ion exchange treatment using commercially available ion exchange resins and the like is effective as the method for removing the metal ions derived from the oxidant and the anions. For the quantification of the impurities included in the conductive polymer after the purification, analysis can be performed by ICP emission analysis, ion chromatography or the like.

Next, as a third step, the purified conductive polymer and an oxidant are mixed in an aqueous solvent comprising a polyacid. In the third step, the polyacid acts as a dispersant, and therefore, a mixed liquid with good dispersibility can be obtained. At least the doping action of the polyanions derived from the polyacid component is considered as the dispersion mechanism.

The aqueous solvent is preferably water and may be a mixed solvent of water and a water-soluble organic solvent. Specific examples of the water-soluble organic solvent include protic polar solvents such as methanol, ethanol, propanol and acetic acid; and aprotic polar solvents such as N,N-dimethylformamide, dimethylsulfoxide, acetonitrile and acetone.

The concentration of the conductive polymer in the aqueous solvent is preferably 0.1 to 20 % by weight, more preferably 0.5 to 0 % by weight.

A polyacid or a salt thereof can be used as the polyacid component. Specific examples of the polyacid include polycarboxylic acids such as polyacrylic acid, polymethacrylic acid and polymaleic acid; polysulfonic acids such as polyvinylsulfonic acid, poly(2-acrylamide-2-methylpropanesulfonic acid) and polystyrenesulfonic acid; and copolymers having these structural units. Specific examples of the salt of the polyacid include the lithium salts, sodium salts, potassium salts and ammonium salts of the polyacids. Among them, polystyrenesulfonic acids having a structural unit represented by the following formula (3) are preferred. One polyacid component may be used, or two or more polyacid components may be used in combination.

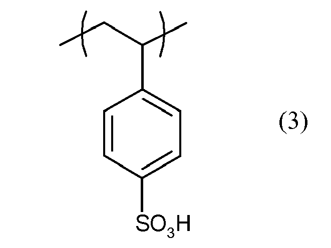

The polyacid component has a weight average molecular weight of preferably 2,000 to 500,000, more preferably 10,000 to 200,000, in order to obtain a conductive polymer with high conductivity.

The amount of the polyacid component used is preferably 20 to 3,000 parts by weight, further preferably 30 to 1,000 parts by weight, with respect to 100 parts by weight of the conductive polymer obtained in the second step, in order to obtain a conductive polymer with high conductivity.

As an oxidant, the same oxidant as that used in the first step can be used, and ammonium persulfate and hydrogen peroxide are preferred. The amount of the oxidant used is preferably 0.5 to 50 parts by weight, further preferably 1 to 30 parts by weight, with respect to 1 part by weight of the conductive polymer obtained in the second step, in order to obtain a conductive polymer with high conductivity.

The reaction temperature is not particularly limited, but is preferably in the range of 0 °C to 100 °C, more preferably 10 °C to 50 °C. The reaction time is not particularly limited, but is about 5 to 100 hours.

More preferably, ion exchange treatment is performed after the third step.

Next, as a fourth step, an imidazole compound is added to the mixed liquid obtained in the third step to obtain a conductive polymer suspension. In the fourth step, the polyacid that is not doped and is liberated in the third step can be neutralized, the pH of the conductive polymer suspension can be adjusted to 1.6 to 14, and the conductive polymer suspension with good dispersibility can be obtained.

Imidazole and 2-methylimidazole are preferably used as the imidazole compound, in terms of the purity of the aqueous solution of the conductive polymer and design flexibility.

Imidazole and 2-methylimidazole are preferred because they do not have metal ions, unlike inorganic bases such as sodium hydroxide and potassium hydroxide, and therefore, there is no mixing of harmful metal ions in the conductive organic material. Imidazole and 2-methylimidazole also have an advantage that the design flexibility of the amount of imidazole and 2-methylimidazole added is high because they are also highly soluble in water.

The amount of the imidazole compound added is preferably in the range of 0.01 to 20 parts by weight, with respect to 100 parts by weight of the mixed liquid of the conductive polymer, in terms of not impairing conductivity.

Also, in the fourth step, in addition, resins such as polyester resins, polyamide resins, polyimide resins, polyether resins and polystyrene resins, which generally function as binding action, may be added. The amount of the resin added is preferably in the range of 0.01 to 20 parts by weight, with respect to 100 parts by weight of the mixed liquid of the conductive polymer, in terms of not impairing conductivity.

The conductive polymer suspension of an exemplary embodiment usually exhibits a dark blue color.

A conductive polymer material can be obtained by removing a solvent from a conductive polymer suspension of an exemplary embodiment. This conductive polymer material has high conductivity. The conductive polymer has a high degree of crystallinity and disperses light, and therefore, this conductive polymer material is not transparent and exhibits a color close to a black color.

The removal of the solvent can be performed by drying the conductive polymer. The temperature for the removal and drying of the solvent is not particularly limited as long as it is equal to or less than the decomposition temperature of the conductive polymer. The temperature range is preferably 300 °C or less.

The conductive polymer material obtained by removing the solvent from the conductive polymer suspension of an exemplary embodiment can be used as the solid electrolyte layer of a solid electrolytic capacitor. The conductive polymer included in the conductive polymer suspension, and the conductive polymer material obtained by removing the solvent from the conductive polymer suspension have high conductivity, and therefore, a capacitor with low ESR can be obtained. Further, the degree of crystallinity of the conductive polymer is high, and therefore, the oxygen barrier properties are also correlatively high, and an improvement in the reliability of a capacitor is also sufficiently promising.

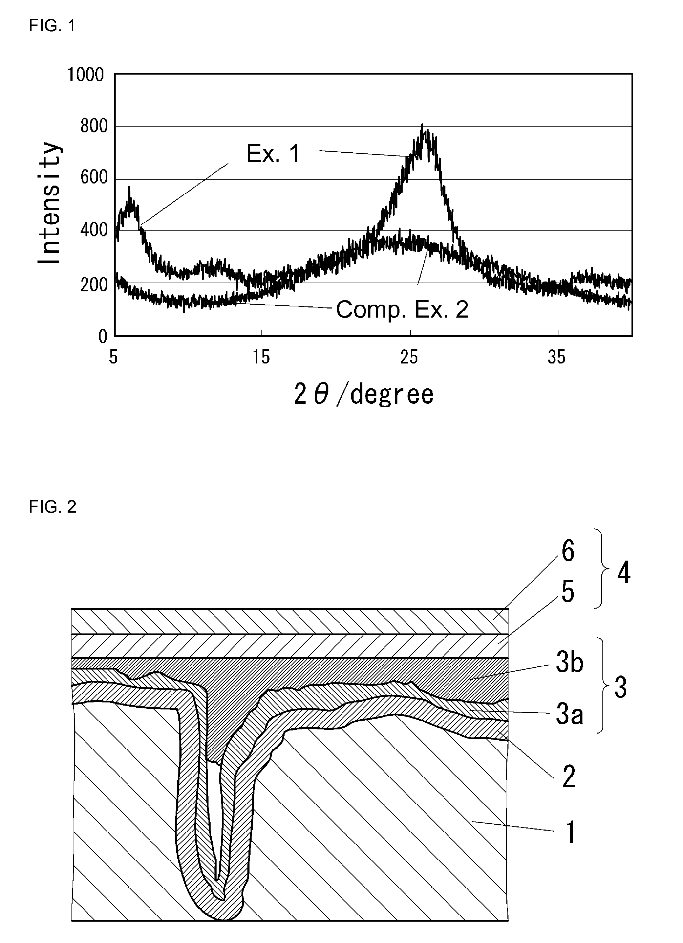

Next, a configuration of a solid electrolytic capacitor using the conductive polymer material obtained from the conductive polymer suspension and a method of producing the same will be described with reference to FIG. 2.

The solid electrolytic capacitor as shown in FIG. 2 has a structure in which a dielectric layer 2, a solid electrolyte layer 3 and a cathode conductor 4 are formed in this order on an anode conductor 1.

The anode conductor 1 is formed of a plate, foil or wire of a valve action metal, a sintered body of fine particles of a valve action metal, a porous body metal subjected to surface enlargement treatment by etching, or the like. Specific examples of the valve action metal include tantalum, aluminum, titanium, niobium and zirconium, and alloys thereof. At least one selected from tantalum, aluminum, and niobium is preferred.

The dielectric layer 2 is a film formed by the electrolytic oxidation of a surface of the anode conductor 1 and is also formed in the void portions of the sintered body, the porous body, or the like. The thickness of the dielectric layer can be appropriately adjusted by the voltage of the electrolytic oxidation.

The solid electrolyte layer 3 comprises at least a conductive polymer material formed by removing the solvent from the above-described conductive polymer suspension. Examples of the method for forming the solid electrolyte layer 3 include a method for coating or impregnating the dielectric layer 2 with the above-described conductive polymer suspension and removing the solvent from the conductive polymer suspension by drying or the like to form the solid electrolyte layer 3.

The coating or impregnation method is not particularly limited, but it is preferred to leave the dielectric layer 2 for several minutes to several tens of minutes after the coating or the impregnation in order to sufficiently fill the inside of the porous pores with the conductive polymer suspension. Repeated immersion, a reduced-pressure method, or a pressure method is preferred.

The removal of the solvent from the conductive polymer suspension can be performed by drying the conductive polymer. The drying temperature is not particularly limited as long as it is in a temperature range in which the solvent removal is possible. But, the upper limit temperature is preferably less than 300 °C, in terms of preventing element degradation due to heat. The drying time needs to be appropriately optimized depending on the drying temperature. But, the drying time is not particularly limited as long as it is in a range in which the conductivity is not impaired.

Here, for example, conductive polymers consisting of pyrrole, thiophene and aniline, and derivatives thereof; oxide derivatives such as manganese dioxide and ruthenium oxide; and organic semiconductors such as TCNQ (7,7,8,8,-tetracyanoquinodimethane complex salt) may be included.

Here, the solid electrolyte layer 3 can also be a two-layer structure of a first solid electrolyte layer 3a and a second solid electrolyte layer 3b. It is possible to form the first solid electrolyte layer 3a comprising a conductive polymer on the dielectric layer 2 by the chemical oxidative polymerization or electrolytic polymerization of a monomer providing the conductive polymer, then, coating or impregnating the first solid electrolyte layer 3a with the above-described conductive polymer suspension, and removing the solvent from the conductive polymer suspension by drying or the like to form the second solid electrolyte layer 3b.

At least one selected from pyrrole, thiophene and aniline, and derivatives thereof can be used as the monomer. Sulfonic acid compounds such as alkylsulfonic acid, benzenesulfonic acid, naphthalenesulfonic acid, anthraquinonesulfonic acid and camphorsulfonic acid, and derivatives thereof are preferred as a dopant used in subjecting the monomer to chemical oxidative polymerization or electrolytic polymerization to obtain the conductive polymer. The molecular weight of the dopant can be appropriately selected from a low molecular compound to a high molecular weight compound and used. The solvent may be either only water or a mixed solvent comprising a water-soluble organic solvent.

The conductive polymer included in the first solid electrolyte layer 3a, and the conductive polymer included in the second solid electrolyte layer 3b are preferably polymers of the same type.

The cathode conductor 4 is not particularly limited as long as it is a conductor. But, the cathode conductor 4 can be, for example, a two-layer structure of a carbon layer 5 of graphite or the like, and a silver conductive resin 6.

### EXAMPLES

An exemplary embodiment will be more specifically described below, based on Examples, but an exemplary embodiment is not limited only to these Examples.

### <<Example 1>>

### <First Step>

3,4-ethylenedioxythiophene (1 g) as a monomer, camphorsulfonic acid (1 g), which is a dopant, and iron (III) p-toluenesulfonate (9 g) which functions as an oxidant and a dopant were dissolved in ethanol (30 ml) as a solvent. The obtained solution was stirred at room temperature for 24 hours to perform chemical oxidative polymerization to synthesize poly (3,4-ethylenedioxythiophene). At this time, the solution changed from yellow to dark blue.

### <Second Step>

The obtained solution was filtered using a reduced-pressure filtration apparatus, and the powder was recovered. The powder was washed with pure water to remove the excess oxidant and dopant. At this time, the washing with pure water was repeated until the acidity of the filtrate came to be pH 6 to 7. Then, the monomer, the oxidant, and an oxidant after the reaction (iron (III) p-toluenesulfonate) were removed using ethanol. The washing with ethanol was performed until the filtrate color came to be colorless and transparent

### <Third Step>

The powder (0.5 g) after the purification was dispersed in water (50 ml), and then, an aqueous solution (3.3 g) containing 20 % by weight of polystyrenesulfonic acid (weight average molecular weight: 50,000) as a polyacid component was added. Further, ammonium persulfate (1.5 g) as an oxidant was added, and the resultant mixture was stirred at room temperature for 24 hours for reaction. The obtained polythiophene solution was dark blue.

### <Fourth Step>

Imidazole (1 g) as an imidazole compound was dissolved in the polythiophene solution (10 g) obtained in the third step, at room temperature, to produce a polythiophene suspension.

The pH of the obtained polythiophene suspension was measured using a pH meter D-20 produced by HORIBA. Then, 100 µl of the obtained polythiophene suspension was dropped on a glass substrate and dried in a thermostat at 125 °C to form a conductive polymer film. The surface resistivity (Ω/□) and film thickness of the conductive polymer film were measured by a four-terminal method, and the conductivity (S/cm) of the conductive polymer film was calculated. The results are shown in Table 1. Also, in order to evaluate the crystallinity of the formed conductive polymer film, the X-ray diffraction of the conductive polymer film was measured. The measurement was performed with scan with a 2θ of 5° to 40°. The measurement result is shown in FIG. 1. Further, part of the formed conductive polymer film was taken, and the glass transition temperature was measured by a differential scanning calorimeter (DSC). The result is shown in Table 2.

### «Example 2»

A polythiophene suspension was produced as in Example 1, except that 2-methylimidazole (1 g) was used as an imidazole compound used in the fourth step. The pH of the polythiophene suspension was measured as in Example 1. Also, a conductive polymer film was formed by the method as in Example 1, and then, the conductivity was calculated.

The results are shown in Table 1.

### «Example 3»

A polythiophene suspension was produced as in Example 1, except that as a polystyrenesulfonic acid that is the polyacid component used in the third step, polystyrenesulfonic acid having a weight average molecular weight of 14,000 was used. The pH of the polythiophene suspension was measured as in Example 1. Also, a conductive polymer film was formed by the method as in Example 1, and then, the conductivity was calculated. The results are shown in Table 1.

### «Example 4»

A polythiophene suspension was produced as in Example 1, except that as a polystyrenesulfonic acid that is the polyacid component used in the third step, polystyrenesulfonic acid having a weight average molecular weight of 500,000 was used. The pH of the polythiophene suspension was measured as in Example 1. Also, a conductive polymer film was formed by the method as in Example 1, and then, the conductivity was calculated. The results are shown in Table 1.

### «Example 5»

A polythiophene suspension was produced as in Example 1, except that in the second step, the obtained powder was washed with boiling hot pure water, following washing with pure water and ethanol. The pH of the polythiophene suspension was measured as in Example 1. Also, a conductive polymer film was formed by the method as in Example 1, and then, the conductivity was calculated. The results are shown in Table 1.

### «Example 6»

A polythiophene suspension was produced as in Example 1, except that in the second step, the obtained powder was heated and dried in a thermostat at 125 °C, following washing with pure water and ethanol. The pH of the polythiophene suspension was measured as in Example 1. Also, a conductive polymer film was formed by the method as in Example 1, and then, the conductivity was calculated. The results are shown in Table 1.

### «Example 7»

A polythiophene suspension was produced as in Example 2, except that in the second step, the obtained powder was heated and dried in a thermostat at 125 °C, following washing with pure water and ethanol. The pH of the polythiophene suspension was measured as in Example 1. Also, a conductive polymer film was formed by the method as in Example 1, and then, the conductivity was calculated. The results are shown in Table 1.

### «Example 8»

### <First Step>

3,4-ethylenedioxythiophene (1 g) as a monomer was dispersed in 100 ml of water as a solvent, using dodecylbenzenesulfonic acid (2.3 g) which functions as a dopant and a surfactant. The resultant mixture was stirred at room temperature for 1 hour for good dispersion, and then, ammonium persulfate (2.4 g) as an oxidant was added. The obtained dispersion was stirred at room temperature for 100 hours to perform chemical oxidative polymerization. At this time, the dispersion changed from yellow to dark blue.

### <Second Step>

A powder was recovered from the obtained dispersion, using a centrifuge (5,000 rpm). The powder was washed by decantation using pure water in the centrifuge to remove the excess oxidant and dopant. At this time, the washing with pure water was repeated until the acidity of the supernatant liquid came to be pH 6 to 7.

The third and subsequent steps were performed as in Example 1 to produce a polythiophene suspension. The pH of the polythiophene suspension was measured as in Example 1. Also, a conductive polymer film was formed by the method as in Example 1, and then, the conductivity was calculated. The results are shown in Table 1.

### «Example 9»

The first step and the second step were performed as in Example 8. The third and subsequent steps were performed as in Example 2 to produce a polythiophene suspension. The pH of the polythiophene suspension was measured as in Example 1. Also, a conductive polymer film was formed by the method as in Example 1, and then, the conductivity was calculated. The results are shown in Table 1.

### «Example 10»

### <First Step>

3,4-ethylenedioxythiophene (1 g) as a monomer and camphorsulfonic acid (1 g) as a dopant were dispersed in 100 ml of water as a solvent, using polyethylene glycol (weight average molecular weight: 4,000) (2 g) which functions as a surfactant. The resultant mixture was stirred at room temperature for 1 hour for good dispersion, and then, ammonium persulfate (2.4 g) as an oxidant was added. The obtained dispersion was stirred at room temperature for 100 hours for chemical oxidative polymerization. At this time, the dispersion changed from yellow to dark blue.

### <Second Step>

A powder was recovered from the obtained dispersion, using a centrifuge (5,000 rpm). The powder was washed by decantation using pure water in the centrifuge to remove the excess oxidant and dopant. At this time, the washing with pure water was repeated until the acidity of the supernatant liquid was pH 6 to 7.

The third and subsequent steps were performed as in Example 1 to produce a polythiophene suspension. The pH of the polythiophene suspension was measured as in Example 1. Also, a conductive polymer film was formed by the method as in Example 1, and then, the conductivity was calculated. The results are shown in Table 1.

### <<Example 11>>

The first step and the second step were performed as in Example 10. The third and subsequent steps were performed as in Example 2 to produce a polythiophene suspension. The pH of the polythiophene suspension was measured as in Example 1. Also, a conductive polymer film was formed by the method as in Example 1, and then, the conductivity was calculated. The results are shown in Table 1.

### <<Example 12>>

A porous aluminum was used as an anode conductor consisting of a valve action metal and an oxide coating film was formed on the surface of the aluminum metal by anodic oxidation. The anode portion and the cathode portion were separated by an insulating resin. The cathode portion was immersed in the polythiophene suspension produced in Example 1, pulled up, and then, dried and solidified at 125 °C to form a solid electrolyte layer. A graphite layer and a silver-containing resin layer were formed in this order on the solid electrolyte layer to produce a solid electrolytic capacitor.

The ESR of the obtained solid electrolytic capacitor was measured using an LCR meter at a frequency of 100 kHz. The value of the ESR for the total area of the cathode portion was normalized to that for a unit area (1 cm²) and the normalized value of the ESR is shown in Table 3.

### <<Example 13>>

A porous aluminum was selected as an anode conductor consisting of a valve action metal, and an oxide coating film was formed on the surface of the aluminum metal by anodic oxidation. The anode portion and the cathode portion were separated by an insulating resin. The porous anode body was repeatedly immersed in and pulled up from a monomer liquid in which pyrrole (10 g) as a monomer was dissolved in pure water (200 ml), and an oxidant liquid in which p-toluenesulfonic acid (20 g) as a dopant and ammonium persulfate (10 g) as an oxidant were dissolved in pure water (200 ml), in this order, 10 times, to form a first solid electrolyte layer on the anode oxide coating film of the cathode portion by chemical oxidative polymerization.

The polythiophene suspension produced in Example 1 was dropped on the first solid electrolyte layer, and dried and solidified at 125 °C to form a second solid electrolyte layer. A graphite layer and a silver-containing resin layer were formed in this order on the second solid electrolyte layer to produce a solid electrolytic capacitor.

The ESR of the obtained solid electrolytic capacitor was measured at a frequency of 100 kHz as in Example 12. The result is shown in Table 3.

### <<Example 14>>

A solid electrolytic capacitor was produced as in Example 13, except that the polythiophene suspension produced in Example 3 was used. The ESR of the solid electrolytic capacitor was measured at a frequency of 100 kHz as in Example 12. The result is shown in Table 3.

### <<Example 15>>

A solid electrolytic capacitor was produced as in Example 13, except that the polythiophene suspension produced in Example 8 was used. The ESR of the solid electrolytic capacitor was measured at a frequency of 100 kHz as in Example 12. The result is shown in Table 3.

### <<Example 16>>

A solid electrolytic capacitor was produced as in Example 13, except that the polythiophene suspension produced in Example 10 was used. The ESR of the solid electrolytic capacitor was measured at a frequency of 100 kHz as in Example 12. The result is shown in Table 3.

### <<Comparative Example 1>>

Polystyrenesulfonic acid having a weight average molecular weight of 4,000 (2 g), 3,4-ethylenedioxythiophene (0.5 g), and iron (III) sulfate (0.05 g) were dissolved in water (20 ml), and air was introduced for 24 hours to produce a polythiophene solution. Then, the pH of the polythiophene suspension was measured as in Example 1. Also, a conductive polymer film was formed by the method as in Example 1, and then, the conductivity of the conductive polymer film was calculated. The results are shown in Table 1.

### <<Comparative Example 2>>

A polythiophene solution was produced as in Comparative Example 1, except that polystyrenesulfonic acid having a weight average molecular weight of 50,000 was used. The pH of the polythiophene suspension was measured as in Example 1. Also, a conductive polymer film was formed by the method as in Example 1, and then, the conductivity was calculated. The results are shown in Table 1.

### <<Comparative Example 3>>

A solid electrolytic capacitor was produced as in Example 12, except that the polythiophene solution produced in Comparative Example 2 was used. Then, the ESR of the solid electrolytic capacitor was measured at a frequency of 100 kHz as in Example 12. The result is shown in Table 3.

**Table 1**

| | pH | Conductivity (S/cm) |
|---|---|---|
| Ex. 1 | 5.21 | 440 |
| Ex. 2 | 5.32 | 410 |
| Ex. 3 | 5.42 | 444 |
| Ex. 4 | 5.68 | 440 |
| Ex. 5 | 5.77 | 451 |
| Ex. 6 | 5.36 | 455 |
| Ex. 7 | 6.01 | 453 |
| Ex. 8 | 5.89 | 421 |
| Ex. 9 | 5.44 | 419 |
| Ex. 10 | 5.22 | 511 |
| Ex. 11 | 5.36 | 501 |
| Comp. Ex. 1 | 2.01 | 105 |
| Comp. Ex. 2 | 1.98 | 110 |

**Table 2**

| | Glass transition temperature (°C) |
|---|---|
| Ex. 1 | 271.5 |
| Comp. Ex. 2 | 251.0 |

**Table 3**

| | ESR (mΩ/cm²) |
|---|---|
| Ex. 12 | 2.5 |
| Ex. 13 | 2.0 |
| Ex. 14 | 1.8 |
| Ex. 15 | 1.5 |
| Ex. 16 | 1.2 |
| Comp. Ex. 3 | 3.2 |

As shown in Table 1, the conductive polymers according to an exemplary embodiment in all Examples have higher conductivity than Comparative Examples 1 and 2, and the effect of higher conductivity by an exemplary embodiment is clear. This is because by undergoing the first step to the forth steps, the choice of the dopant is wide, and a dopant increasing the degree of crystallinity can be selected. As for this, it is clear from the X-ray diffraction measurement results shown in FIG. 1 that the crystallinity of the conductive polymer material according to an exemplary embodiment is high. Therefore, the conductive polymer material according to an exemplary embodiment has good electron conduction between the conductive polymer chains and is highly conductive. Also, with respect to the amorphous Comparative Example 2, the conductive polymer according to an exemplary embodiment has a high degree of crystallinity and disperses light, and therefore, the conductive polymer according to an exemplary embodiment is not transparent and exhibits a color close to a black color. A solvent with high compatibility with the monomer can be selected, and therefore, the degree of polymerization is high. The washing is easy, and therefore, higher purity can be intended.

From Table 2, it has been noted that by undergoing the first step to the third step, the conductive polymer film formed in Example 1 has higher glass transition temperature and a higher degree of polymerization than the conductive polymer film formed in Comparative Example 2. This is considered to be due to the selection of the solvent with high compatibility with the monomer in the solvent selection in the first step, and the effect of adding the surface-active substance.

Also, the use of hot pure water in washing can provide a higher solubility of the unnecessary components, and heating and drying can remove the volatile components. Thus, further higher purity can be intended. As a result, the conductivity is improved.

Further, it is also clear that the addition of imidazole or 2-methylimidazole in the fourth step increases the conductivity. As this principle, first, the undoped dopant anions (a resistance component) introduced in the third step and present near the conductive polymer particles in the suspension solution are neutralized with imidazole or 2-methylimidazole to produce an imidazole salt, and thereby, an electrochemical double layer is formed on the conductive polymer particle surfaces, and the particles repel each other to increase the dispersibility. Then, the polythiophene solution in a highly dispersed state is heated and dried to obtain a conductive material in which polythiophene is uniformly present, leading to an improvement in conductivity. The neutralization of the polyacid ions with imidazole or 2-methylimidazole is checked by the infrared spectroscopy and X-ray photoelectron spectroscopy of the organic conductive material concerned. Also, the dispersibility of the polythiophene component can be observed by dying, with ruthenium tetroxide, the conductive material obtained by drying the aqueous solution of the conductive polymer concerned, and then observing the conductive material through a transmission electron microscope.

Also, from Table 3, in the solid electrolytic capacitors using a conductive polymer according to an exemplary embodiment as a solid electrolyte, the conductivities of the conductive polymers are high, and therefore, the resistances of the solid electrolytes can be reduced, and the resistance (ESR) of the solid electrolytic capacitors can be reduced.

## Claims

1. A method for producing a conductive polymer suspension, comprising:
subjecting a monomer providing a conductive polymer to chemical oxidative polymerization in a solvent comprising a dopant of an organic acid or a salt thereof, using an oxidant, to synthesize the conductive polymer;
purifying the conductive polymer;
mixing the purified conductive polymer and an oxidant in an aqueous solvent comprising a polyacid; and
adding an imidazole compound to the obtained mixed liquid to obtain the conductive polymer suspension.

2. The method for producing a conductive polymer suspension according to claim 1, wherein the monomer is at least one selected from pyrrole, thiophene and aniline, and derivatives thereof.

3. The method for producing a conductive polymer suspension according to claim 2, wherein the monomer is 3,4-ethylenedioxythiophene.

4. The method for producing a conductive polymer suspension according to any one of claims 1 to 3, wherein the dopant is at least one selected from benzenesulfonic acid, naphthalenesulfonic acid and camphorsulfonic acid, and derivatives thereof, and salts thereof.

5. The method for producing a conductive polymer suspension according to any one of claims 1 to 4, wherein the polymerization of the monomer is performed in the presence of a surfactant.

6. The method for producing a conductive polymer suspension according to any one of claims 1 to 5, wherein for the purification of the conductive polymer, the conductive polymer is washed using a solvent capable of dissolving the monomer and/or the oxidant.

7. The method for producing a conductive polymer suspension according to claim 6, wherein for the purification of the conductive polymer, the conductive polymer is further subjected to hot water washing and/or heat treatment.

8. The method for producing a conductive polymer suspension according to any one of claims 1 to 7, wherein the polyacid is polystyrenesulfonic acid.

9. The method for producing a conductive polymer suspension according to claim 8, wherein the polystyrenesulfonic acid has a weight average molecular weight of 2,000 to 500,000.

10. The method for producing a conductive polymer suspension according to any one of claims 1 to 9, wherein the imidazole compound is at least one selected from imidazole and 2-methylimidazole.

11. A conductive polymer suspension obtained by a method according to any one of claims 1 to 10.

12. A conductive polymer material obtained by removing the solvent from a conductive polymer suspension according to claim 11.

13. A solid electrolytic capacitor comprising a solid electrolyte layer comprising a conductive polymer material according to claim 12.

14. A method for producing a solid electrolytic capacitor, comprising:
forming a dielectric layer on a surface of an anode conductor consisting of a valve action metal; and
coating or impregnating the dielectric layer with a conductive polymer suspension according to claim 11 and removing the solvent from the conductive polymer suspension to form a solid electrolyte layer comprising a conductive polymer material.

15. A method for producing a solid electrolytic capacitor, comprising:
forming a dielectric layer on a surface of an anode conductor consisting of a valve action metal;
subjecting a monomer providing a conductive polymer to chemical oxidative polymerization or electrolytic polymerization on the dielectric layer to form a first solid electrolyte layer comprising the conductive polymer; and
coating or impregnating the first solid electrolyte layer with a conductive polymer suspension according to claim 11 and removing the solvent from the conductive polymer suspension to form a second solid electrolyte layer.
